# EUROPÄISCHE PATENTSCHRIFT

(11) **EP 2 044 258 B1**
(45) Veröffentlichungstag und Bekanntmachung des Hinweises auf die Patenterteilung: **24.10.2012**
(21) Anmeldenummer: 07763953.2
(22) Anmeldetag: 19.07.2007
(51) Int. Cl.: G06K 19/04, G06K 19/02, D06H 1/04, G06K 19/077, G08B 13/24

(54) **RFID-ETIKETTE**
RFID TAG
ÉTIQUETTE RFID

(30) Priorität: 24.07.2006 CH 11932006
(43) Veröffentlichungstag der Anmeldung: 08.04.2009
(73) Patentinhaber: TEXTILMA AG, 6362 Stansstad (CH)
(72) Erfinder: SPEICH, Francisco, CH-5073 Gipf-Oberfrick (CH)
(74) Vertreter: Schmauder & Partner AG Patent- & Markenanwälte VSP
(86) Internationale Anmeldenummer: PCT/CH2007/000353
(87) Internationale Veröffentlichungsnummer: WO 2008/011739

(56) Entgegenhaltungen:
- EP-A- 0 822 527
- WO-A-02/27651
- WO-A-03/065303
- WO-A-2006/029543
- ES-A1- 2 206 029
- FR-A1- 2 823 898
- US-A1- 2004 188 531

## Beschreibung

### Technisches Gebiet

Die Erfindung betrifft eine RFID-Etikette gemäss Anspruch 1.

### Stand der Technik

Aus der WO 02/93524 A ist eine RFID-Etikette bekannt, bei der ein vollständiger Transponder bestehend aus einer auf einem Träger angeordneten Antenne mit angeschlossenem Chip zunächst auf eine Trägerschicht übertragen wird, die dann mit einer Designetikette verbunden wird, wobei letztere die Trägerschicht saumartig übergreift. Da der Transponder als Einheit vorliegt, bildet er eine eigene Schicht und führt somit zu einer dreischichtigen und damit relativ dicken und starren RFID-Etikette. Solche RFID-Etiketten sind relativ aufwändig und wenig flexibel und bilden bei einer Verwendung in Kleidungsstücken unerwünschte Unstetigkeitsstellen, die den Tragkomfort beeinträchtigen.

Aus der WO 94/29503 ist eine weitere RFID-Etikette bekannt, bei der die Designetikette aus zwei Schichten besteht, die Taschen bilden, in die Transponder eingelegt sind. Auch diese mehrschichtige RFID-Etikette ist nicht nur schwierig herzustellen sondern auch relativ dick und starr und weist somit die gleichen unerwünschten Eigenschaften auf, wie die oben beschriebene RFID-Etikette.

Aus der WO 03/065303 A1 ist ein gefaltetes Einnähetikett mit Transponder bekannt, bei dem aber der aus dem Transponderchip und seiner Antenne bestehende Transponder z.B. auf der Rückseite des Etiketts angeordnet wird. Dieses Einnähetikett weist gegenüber dem vorgenannten Stand der Technik, insbesondere gegenüber dem aus der WO 94/29503 bekannten RFID-Etikette keine Vorteile auf.

Aus der ES 2 206 029 A ist eine gefaltete Textiletikette bekannt, bei der der Transponder aufgeklebt ist. In der WO 02/27651 A1 wird ein als Chipkarte ausgebildeter Datenträger gezeigt, bei dem die Transponderantenne eingenäht ist.

### Darstellung der Erfindung

Aufgabe der Erfindung ist es, eine RFID-Etikette der eingangs genannten Art zu verbessern.

Die Aufgabe wird gelöst durch die RFID-Etikette gemäss Anspruch 1.

Dadurch, dass RFID-Etikette eine Textilschicht aufweist, die längs einer Faltlinie in zwei Abschnitte unterteilt ist, wobei der erste Abschnitt als Designetikette ausgebildet ist, über den der zweite Abschnitt gefaltet ist, der als Transponderetikette ausgebildet ist und der eine Antenne eingearbeitet enthält, die mit dem Chip verbunden ist, ergibt sich zunächst eine sehr einfache RFID-Etikette, da sie einstückig herstellbar ist und somit eine Seite der Designetikette bereits fest mit der Transponderetikette verbunden ist. Der zweite Abschnitt der Textilschicht kann mit einer bedeutend geringeren Schusszahl pro cm hergestellt werden als der erste Abschnitt. Der Chip und der Antennenfaden müssen nicht über die durch die flottierenden Figurfäden gegebene Verdickung eingearbeitet werden. Dadurch, dass die Antenne in die Textilschicht eingearbeitet oder auf dieser angebracht ist, ist auch der Chip direkt an der Textilschicht angeordnet und mit der Antenne verbunden und bildet somit eine Transponderetikette, die direkt mit der Designetikette verbunden ist. Durch diese sandwichartige Ausbildung sind die Antenne und der Chip auch geschützt. Es liegt somit eine nur zweischichtige RFID-Etikette vor, die viel dünner und weniger auftragend ist als die bekannten dreischichtigen RFID-Etiketten. Dies verbessert die Flexibilität der RFID-Etikette und damit deren Handhabung und Tragkomfort.

Bevorzugte Ausführungsformen der RFID-Etikette sind in den Ansprüchen 2 bis 14 definiert.

Bevorzugt ist es, wenn nach Anspruch 2 die Antenne mäander- oder zickzackförmig oder spulenartig in oder an der Textilschicht angeordnet ist. Gemäss Anspruch 3 kann die Antenne am zweiten Abschnitt jeweils bis an die Abschnittkante geführt sein und somit im ersten Abschnitt keine Fortsetzung haben. Es ist aber auch möglich, gemäss Anspruch 4 die Antenne längs der Designetikette bis an die Kante zu führen, welche der Faltlinie abgewandt ist. Dies ist insbesondere für die Herstellung des RFID-Etikette von Vorteil, da solche RFID-Etiketten in der Regel auf eine Webmaschine aufeinanderfolgend hergestellt werden und der Antennenfaden dann ohne Unterbruch durchgehend von einer Etikett zur nächsten geführt werden kann.

Die RFID-Etikette weist nach Anspruch vorzugsweise einen HF- oder UHF-Chip auf.

Gemäss Anspruch 6 kann die RFID-Etikette auch plastifiziert sein, wodurch sich die Haltbarkeit verbessern lässt.

Es ist weiter von Vorteil, wenn gemäss Anspruch 7 die Textilschicht einen Schmelzklebefaden enthält, mittels dessen die Abschnitte miteinander verbunden sind.

Gemäss Anspruch 8 kann die Antenne mit dem Chip verlötet sein. Besonders einfach ist es, wenn gemäss Anspruch 9 die Antenne mittels eines elektrisch leitenden Klebers mit dem Chip verbunden ist. Eine besonders stabile Ausbildung ergibt sich nach Anspruch 10, wenn der Chip zusätzlich mit der Textilschicht durch Kleben verbunden ist.

Gemäss Anspruch 11 ist der zweite Abschnitt höchstens so gross ist wie der erste Abschnitt, damit der zweite Abschnitt nicht über das Designetikett vorsteht.

Die Ausbildung der. RFID-Etikette nach Anspruch 12 erleichtert ihre Herstellung, wenn die Textilschicht gewoben ist und die Faltlinie in Schussrichtung verläuft, dann kann der Antennenfaden nach Art eines Kettfadens behandelt, das heisst zugeführt und gelegt werden.

Besonders vorteilhaft ist es, wenn die Textilschicht mit der eingearbeiteten Antenne nach Anspruch 13 auf einer Nadelwebmaschine hergestellt ist, wodurch gesicherte Kanten gegeben sind. Aber auch eine Herstellung nach Anspruch 14 ist möglich, wobei die Textilschicht mit der eingearbeiteten Antenne auf einer Breitwebmaschine hergestellt und dann in einzelne Bänder zerschnitten wird.

Die vorbenannten sowie die beanspruchten und in den nachfolgenden Ausführungsbeispielen beschriebenen, erfindungsgemäss zu verwendenden Elemente unterliegen in ihrer Grösse, Formgestaltung, Materialverwendung und ihrer technischen Konzeption keinen besonderen Ausnahmebedingungen, so dass die in dem jeweiligen Anwendungsgebiet bekannten Auswahlkriterien uneingeschränkt Anwendung finden können.

### Kurze Beschreibung der Zeichnungen

Weitere Einzelheiten, Vorteile und Merkmale des Gegenstandes der vorliegenden Erfindung ergeben sich aus der nachfolgenden Beschreibung der dazu gehörenden Zeichnungen, in den Zeichnungen zeigen:
- Figur 1: eine RFID-Etikette mit Designetikette mit darüber gefalteter Transponderetikette in schaubildlicher Darstellung;
- Figur 2: die RFID-Etikette der Figur 1 in Aufgeklapptem Zustand in Draufsicht;
- Figur 3: die RFID-Etikette der Figur 2 in abgewandelter Form;
- Figur 4: die RFID-Etikette der Figur 1 in Seitenansicht;
- Figur 5: die Chip-Anordnung im Querschnitt.

### Wege zur Ausführung der Erfindung

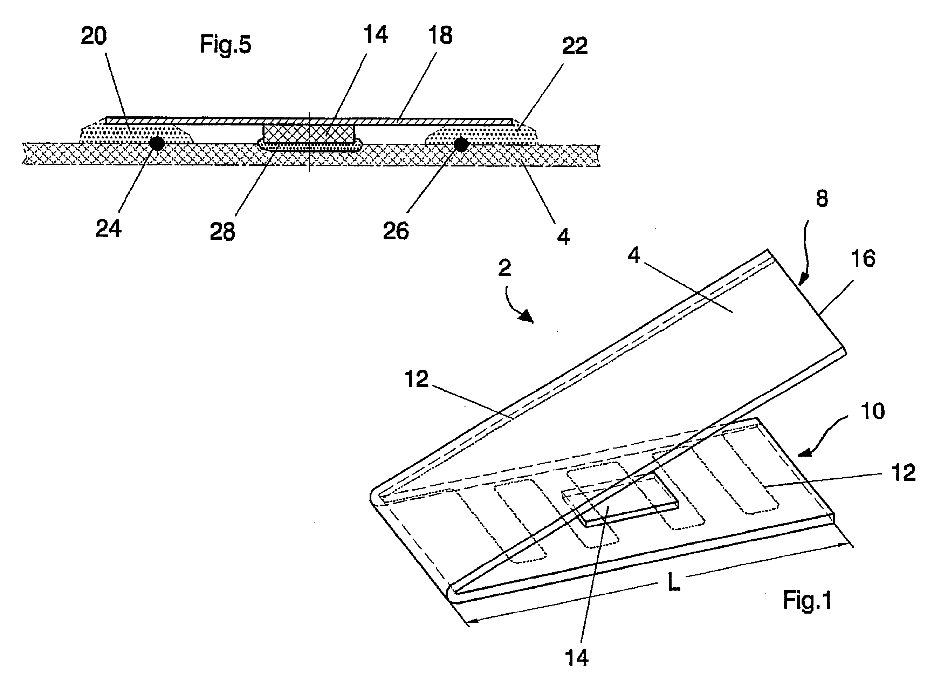

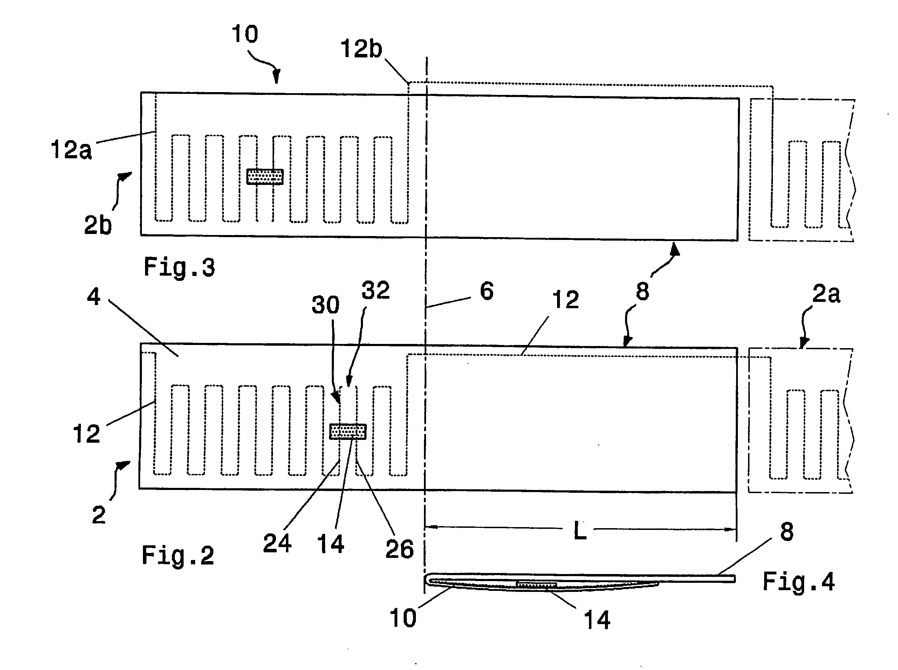

Die Figur 1 zeigt in schaubildlicher Darstellung ein RFID-Etikette 2, welche aus einer Textilschicht 4 gebildet ist, die längs einer Faltlinie 6 in einen ersten Abschnitt 8 und in einen zweiten Abschnitt 10 unterteilt ist. Der erste Abschnitt ist als Designetikette ausgebildet und kann mit entsprechenden Bild- und/oder Wortzeichen versehen sein. Der zweite Abschnitt 10, der als Transponderetikette ausgebildet ist, enthält eine Antenne 12, die im gezeigten Beispiel mäanderförming angeordnet in die Textilschicht 4 eingearbeitet ist. An der Antenne ist ein Chip 14 angeschlossen. Die Länge L des zweiten Abschnittes 10 ist höchstens so gross, bzw. vorzugsweise kleiner als die Länge des ersten Abschnittes 8. Der zweite Abschnitt 10 ist über den ersten Abschnitt 8 gefaltet und liegt an diesem an, wie insbesondere aus Figur 4 zu entnehmen ist. Dabei kann der zweite Abschnitt 10 nicht nur längs der Faltlinie 6 mit dem ersten Abschnitt 8 verbunden sein, sondern noch durch zusätzliche Massnahmen, wie beispielsweise Verklebungen durch nicht näher dargestellte Klebefäden in einem der Abschnitte.

Die Figur 2 zeigt den Grundriss des aufgeklappten RFID-Ettikets 2 aus dem die Anordnung der Antenne ersichtlich ist. Im zweiten Abschnitt 10 verläuft die Antenne 12 mäanderförmig und ist im ersten Abschnitt 8 der Textilschicht 4 geradlinig von der Faltlinie 6 bis zu einer Kante 16 geführt, welche der Faltlinie 6 abgewandt ist. Diese Ausbildung hat den Vorteil, dass die Antenne 12 in einer bandförmig hergestellten Textilschicht 4 fortlaufend eingelegt werden kann und nahtlos von einer RFID-Etikette 2 in eine nachfolgende RFID-Etikette 2a übergeht. Ein solches Etikett wird vorzugsweise mit einer Nadelwebmaschine hergestellt, wobei die Faltlinie in Richtung des Schusses verläuft und die Antenne 12 analog einem Kettfaden zugeführt werden kann.

Die Figur 3 zeigt eine abgewandelte Ausführung des RFID-Etiketts 2b, bei der die Antenne 12a an dem zweiten Abschnitt 10 seitlich nach aussen geführt ist und während der Herstellung des RFID-Etiketts ausserhalb des ersten Abschnittes 8 verläuft. Der ausserhalb des ersten Abschnittes liegende Antennenfaden 12b wird nach der Herstellung eines Bandes aus RFID-Etiktetten abgetrennt.

Wie insbesondere aus Figur 5 zu entnehmen ist, weist der Chip 14 einen Träger 18 auf, der die nicht näher dargestellten Anschlüsse des Chips enthält, die jeweils über einen leitenden Kleber 20, 22 mit Antennenabschnitten 24, 26 der Antenne 12 leitend verbunden sind. Ausserdem ist der Chip 14 über einen weiteren Kleber 28 mit der Textilschicht 4 verbunden. Im Bereich des Chips 14 weist die Antenne 12 eine Kurzschlussbrücke 30 auf, die durch mit eine Unterbrechung 32 ausgeschaltet werden kann. Die Anordnung ist so getroffen, dass beidseits des Chips 14 Antennenabschnitte etwa gleicher Länge zur Verfügung stehen.

### Bezugszeichenliste

- L: Länge des zweiten Abschnittes
- 2: RFID-Etikette
- 2a: RFID-Etikette
- 2b: RFID-Etikette
- 4: Textilschicht
- 6: Faltlinie
- 8: erster Abschnitt
- 10: zweiter Abschnitt
- 12: Antenne
- 12a: Antenne
- 12b: Antenne
- 14: Chip
- 16: Kante
- 18: Träger
- 20: Kleber
- 22: Kleber
- 24: Antennenabschnitt
- 26: Antennenabschnitt
- 28: Kleber
- 30: Kurzschlussbrücke
- 32: Unterbrechung

## Patentansprüche

1. RFID-Etikette mit einer textilen Designetikette, auf deren Rückseite ein Transponder angeordnet ist, der einen mit einer Antenne (12,12a,12b) versehenen Chip (14) aufweist, wobei die RFID-Etikette eine Textilschicht (4) aufweist, die längs einer Faltlinie (6) in zwei Abschnitte (8,10) unterteilt ist, wobei der erste Abschnitt (8) als Designetikette ausgebildet ist, über den der zweite Abschnitt (10) gefaltet ist, der als Transponderetikette ausgebildet ist, **dadurch gekennzeichnet, dass** der zweite Abschnitt (10) eine Antenne (12,12a,12b) eingearbeitet enthält, die mit dem Chip (14) verbunden ist und dass die Textilschicht (4) gewirkt oder gewoben ist, wobei die Antenne (12) eingewirkt oder eingewoben ist.

2. RFID-Etikette nach Anspruch 1, **dadurch gekennzeichnet, dass** die Antenne (12,12a,12b) mäander- oder zickzackförmig oder spulenartig angeordnet ist.

3. RFID-Etikette nach Anspruch 1 oder 2, **dadurch gekennzeichnet, dass** die Antenne (12b) am zweiten Abschnitt (10) jeweils bis an die Abschnittkante geführt ist.

4. RFID-Etikette nach Anspruch 1 oder 2, **dadurch gekennzeichnet, dass** die Antenne (12a) längs der Designetikette (8) bis an die Kante (16) verläuft, welche der Faltlinie (6) abgewandt ist.

5. RFID-Etikette nach einem der Ansprüche 1 bis 3, **dadurch gekennzeichnet, dass** der Transponder einen HF- oder UHF-Chip (14) aufweist.

6. RFID-Etikette nach einem der Ansprüche 1 bis 5, **dadurch gekennzeichnet, dass** sie plastifiziert ist.

7. RFID-Etikette nach einem der Ansprüche 1 bis 6, **dadurch gekennzeichnet, dass** die Textilschicht (4) einen Schmelzklebefaden enthält, mittels dessen die Abschnitte miteinander verbunden sind.

8. RFID-Etikette nach einem der Ansprüche 1 bis 7, **dadurch gekennzeichnet, dass** die Antenne (12) mit dem Chip (14) verlötet ist.

9. RFID-Etikette nach einem der Ansprüche 1 bis 7, **dadurch gekennzeichnet, dass** die Antenne (12) mittels eines elektrisch leitenden Klebers (20,22) mit dem Chip (14) verbunden ist.

10. RFID-Etikette nach einem der Ansprüche 1 bis 9, **dadurch gekennzeichnet, dass** der Chip (14) zusätzlich mit der Textilschicht (4) durch Kleben (28) verbunden ist.

11. RFID-Etikette nach einem der Ansprüche 1 bis 10, **dadurch gekennzeichnet, dass** der zweite Abschnitt (10) höchstens so gross ist wie der erste Abschnitt (8).

12. RFID-Etikette nach einem der Ansprüche 1 bis 11, **dadurch gekennzeichnet, dass** die Textilschicht (4) gewoben ist und die Faltlinie (6) in Schussrichtung verläuft.

13. Verfahren um eine RFID-Etikette nach einem der Ansprüche 1 bis 12 herzustellen **dadurch gekennzeichnet, dass** die Textilschicht (4) mit der eingearbeiteten Antenne (12) auf einer Nadelwebmaschine hergestellt ist.

14. Verfahren um eine RFID-Etikett nach einem der Ansprüche 1 bis 12 herzustellen **dadurch gekennzeichnet, dass** die Textilschicht (4) mit der eingearbeiteten Antenne (12) auf einer Breitwebmaschine hergestellt und ausgeschnitten ist.

## Claims

1. An RFID tag with a textile design tag on the rear of which a transponder is arranged which has a chip (14) provided with an antenna (12, 12a, 12b), wherein the RFID tag has a textile layer (4) which is subdivided into two sections (8, 10) along a folding line (6), wherein the first section (8) is constructed as a design tag over which the second section (10) is folded which is constructed as a transponder tag, **characterized in that** the second section contains incorporated therein an antenna (12, 12b, 12b) which is connected to the chip (14), and that the textile layer (4) is knitted or woven, with the antenna (12) being knitted in or woven in.

2. The RFID tag as claimed in claim 1, **characterized in that** the antenna (12, 12a, 12b) is arranged in meander or zigzag form or like a coil.

3. The RFID tag as claimed in claim 1 or 2, **characterized in that** the antenna (12b) is in each case run up to the section edge at the second section (10).

4. The RFID tag as claimed in claim 1 or 2, **characterized in that** the antenna (12a) extends along the design tag (8) up to the edge (16) which faces away from the folding line (6).

5. The RFID tag as claimed in one of claims 1 to 3, **characterized in that** the transponder has an RF or UHF chip (14).

6. The RFID tag as claimed in one of claims 1 to 5, **characterized in that** it is plasticized.

7. The RFID tag as claimed in one of claims 1 to 6, **characterized in that** the textile layer (4) contains a hot-melt adhesive thread by means of which the sections are joined to one another.

8. The RFID tag as claimed in one of claims 1 to 7, **characterized in that** the antenna (12) is soldered to the chip (14).

9. The RFID tag as claimed in one of claims 1 to 7, **characterized in that** the antenna (12) is connected to the chip (14) by means of an electrically conductive adhesive (20, 22).

10. The RFID tag as claimed in one of claims 1 to 9, **characterized in that** the chip (14) is additionally bound to the textile layer (4) by bonding (28).

11. The RFID tag as claimed in one of claims 1 to 10, **characterized in that** the second section (10) is at most as large as the first section (8).

12. The RFID tag as claimed in one of claims 1 to 11, **characterized in that** the textile layer (4) is woven and the folding line (6) extends in the weft direction.

13. The RFID tag as claimed in one of claims 1 to 12, **characterized in that** the textile layer (4) with the incorporated antenna (12) is produced on a needle weaving machine.

14. The RFID tag as claimed in one of claims 1 to 12, **characterized in that** the textile layer (4) with the incorporated antenna (12) is produced and cut out on a broad weaving machine.

## Revendications

1. Etiquette RFID comprenant une étiquette modélisée textile sur la face arrière de laquelle est monté un transpondeur comportant une puce (14) équipée d'une antenne (12, 12a, 12b), l'étiquette RFID comprenant une couche textile (4) qui est subdivisée le long d'une ligne de pliage (6) en deux tronçons (8, 10), le premier tronçon (8) étant réalisé sous la forme d'une étiquette modélisée sur laquelle est replié le second tronçon (10) qui est réalisé sous la forme d'une étiquette de transpondeur,
**caractérisée en ce que**
le second tronçon (10) renferme, insérée dans celui-ci, une antenne (12, 12a, 12b) reliée à la puce (14), et, la couche textile (4) est tricotée ou tissée, l'antenne (12) étant introduite dans cette couche par tricotage ou tissage.

2. Etiquette RFID conforme à la revendication 1,
**caractérisée en ce que**
l'antenne (12, 12a, 12b) est disposée en forme de méandres ou de zigzag ou à la manière d'une bobine.

3. Etiquette RFID conforme à la revendication 1 ou 2,
**caractérisée en ce que**
l'antenne (12b) est respectivement dirigée sur le second tronçon (10) respectivement jusqu'aux bords de celui-ci.

4. Etiquette RFID conforme à la revendication 1 ou 2,
**caractérisée en ce que**
l'antenne (12a) s'étend le long de l'étiquette modélisée (8) jusqu'au bord (16) de celle-ci qui est situé à l'opposé de la ligne de pliage (6).

5. Etiquette RFID conforme à l'une des revendications 1 à 3,
**caractérisée en ce que**
le transpondeur comporte une puce HF ou UHF (14).

6. Etiquette RFID conforme à l'une des revendications 1 à 5,
**caractérisée en ce qu'**
elle est plastifiée.

7. Etiquette RFID conforme à l'une des revendications 1 à 6,
**caractérisée en ce que**
la couche textile (4) renferme un fil de colle à fusion au moyen duquel les tronçons sont reliés l'un à l'autre.

8. Etiquette RFID conforme à l'une des revendications 1 à 7,
**caractérisée en ce que**
l'antenne (12) est soudée à la puce (14).

9. Etiquette RFID conforme à l'une des revendications 1 à 7,
**caractérisée en ce que**
l'antenne (12) est reliée à la puce (14) au moyen d'une colle électriquement conductrice (20, 22).

10. Etiquette RFID conforme à l'une des revendications 1 à 9,
**caractérisée en ce que**
la puce (14) est en outre reliée par collage (28) à la couche textile (4).

11. Etiquette RFID conforme à l'une des revendications 1 à 10,
**caractérisée en ce que**
le second tronçon (10) est au plus de même dimension que le premier tronçon (8).

12. Etiquette RFID conforme à l'une des revendications 1 à 11,
**caractérisée en ce que**
la couche textile (4) est tissée et la ligne de pliage (6) s'étend dans la direction de la trame.

13. Procédé d'obtention d'une étiquette RFID conforme à l'une des revendications 1 à 12,
**caractérisé en ce que**
la couche textile (4) dans laquelle est incorporée l'antenne (12) est réalisée sur un métier à tisser à aiguilles.

14. Procédé d'obtention d'une étiquette RFID conforme à l'une des revendications 1 à 12,
**caractérisé en ce que**
la couche textile (4) dans laquelle est incorporée l'antenne (12) est réalisée sur un métier à tisser en largeur et est découpée.
